# DEMANDE DE BREVET EUROPEEN

(11) **EP 3 072 833 A1**
(43) Date de publication de la demande: **28.09.2016**
(21) Numéro de dépôt: 16159639.0
(22) Date de dépôt: 10.03.2016
(51) Int. Cl.: B65F 1/14, B60B 3/00, B60C 7/24, B65F 1/16

(54) **DISPOSITIF D'ATTÉNUATION DES BRUITS, PRÊT A MONTER, POUR UN CONTENEUR MOBILE ET CONTENEUR MOBILE ÉQUIPÉ D'UN TEL DISPOSITIF**

(30) Priorité: 23.03.2015 FR 1552362
(71) Demandeur: Leveque, Olivier, 44000 Nantes (FR); Eraud, Benoit, 44000 Nantes (FR); Eraud, Antonia, 44000 Nantes (FR); Eraud, Alexandre, 44000 Nantes (FR); Eraud, Charles, 44000 Nantes (FR)
(72) Inventeur: Leveque, Olivier, 44000 Nantes (FR); Eraud, Benoit, 44000 Nantes (FR); Eraud, Antonia, 44000 Nantes (FR); Eraud, Alexandre, 44000 Nantes (FR); Eraud, Charles, 44000 Nantes (FR)
(74) Mandataire: Godineau, Valérie

(57) **Abrégé**

Le dispositif comprend deux bandages (1) de roue élastiquement déformables comprenant chacun une ceinture (2) avec la face (3) externe, de ladite ceinture (2) formant la surface de roulement de la roue du conteneur à l'état positionné du bandage (1) autour de la roue, chaque ceinture (2) étant munie le long de chacun de ses bords longitudinaux d'un flanc (5) latéral circonférentiel interne, flancs (5) latéraux et ceinture (2) conférant audit bandage (1) une section transversale en forme générale de U ouvert en direction de l'intérieur de la ceinture (2), la face (4) interne de la ceinture (2), étant munie de languettes (6) élastiquement déformables s'étendant dans le sens de la largeur de la bande formée par la ceinture (2) et disposées écartées l'une de l'autre suivant une direction circonférentielle.

## Description

La présente invention concerne un dispositif d'atténuation des bruits, prêt à monter, pour un conteneur mobile, ainsi qu'un conteneur mobile équipé d'un tel dispositif.

Elle concerne plus particulièrement un dispositif d'atténuation des bruits pour conteneur mobile du type comprenant une cuve de collecte équipée de deux roues d'appui au sol et d'un couvercle de fermeture de la cuve relié à la cuve par une liaison à pivotement.

De manière générale, un bac roulant de collecte de déchets présente l'inconvénient que lors du roulage, un bruit est généré, pouvant atteindre un niveau de nuisance sonore relativement élevé lorsque le bac est vide, ou pendant ses phases d'utilisation.

Des solutions pour réduire la nuisance sonore lors du roulage ont été imaginées, comme l'illustrent les brevets FR 2 877 651 et FR 2 950 038. Toutefois, dans les deux cas, ces solutions nécessitent de procéder à un changement des roues du bac, ce qui est onéreux et fastidieux. Une autre solution est décrite dans le brevet US-3.387.894.

Un but de la présente invention est donc de proposer un dispositif d'atténuation des bruits du type précité, dont la conception permet sa mise en oeuvre de manière aisée, sans outil.

Un autre but de la présente invention est de proposer un dispositif d'atténuation des bruits dont la conception permet de réduire de manière importante les bruits en visant les sources principales de génération de bruits sur un conteneur.

À cet effet, l'invention a pour objet un dispositif d'atténuation des bruits, prêt à monter, pour conteneur mobile, notamment pour bac de collecte de déchets, du type comprenant une cuve de collecte équipée de deux roues d'appui au sol et d'un couvercle de fermeture de la cuve relié à la cuve par une liaison à pivotement, caractérisé en ce que le dispositif comprend deux bandages de roue élastiquement déformables positionnables chacun autour d'une roue dudit conteneur, chaque bandage comprenant une ceinture avec la face externe, tournée vers l'extérieur, de ladite ceinture apte à former la surface de roulement de la roue à l'état positionné du bandage autour de la roue, chaque ceinture étant munie le long de chacun de ses bords longitudinaux d'un flanc latéral circonférentiel interne, flancs latéraux et ceinture étant réalisés d'une seule pièce et conférant audit bandage une section transversale en forme générale de U ouvert en direction de l'intérieur de la ceinture, la face interne de la ceinture, opposée à la face externe, étant munie de languettes élastiquement déformables s'étendant dans le sens de la largeur de la bande formée par la ceinture et disposées écartées l'une de l'autre suivant une direction circonférentielle.

Le dispositif comprend donc un ensemble de pièces incluant au moins deux bandages de roue.

La présence de bandages se rapportant sur les roues permet de s'affranchir du démontage des roues.

La réalisation des bandages sous forme d'éléments élastiquement déformables permet d'éviter l'utilisation d'outils pour la pose desdits bandages.

La présence de languettes internes aux bandages permet un amortissement efficace, sans entraîner une usure rapide desdits éléments amortisseurs.

Ces languettes permettent aussi de réduire la transmission des vibrations à la cuve via les moyeux des roues.

Elles permettent également d'améliorer la stabilité des bandages sur les roues.

De préférence, les languettes élastiquement déformables affectent la forme de nervures ou de stries.

De préférence, les languettes élastiquement déformables sont réalisées d'une seule pièce avec la face interne de ladite ceinture et s'étendent de manière sensiblement parallèle entre elles.

De préférence, lesdits bandages sont réalisés en un élastomère à base, de préférence, de monomère éthylène-propylène-diène (EPDM) expansé ou non.

De préférence, le dispositif comprend au moins un, avantageusement au moins deux patins, préférentiellement en polyuréthane haute densité, à fonction de réhausse du fond de la cuve de collecte, positionnables sous le fond de ladite cuve. Ces patins sont dans ce cadre avantageusement prévus dans la partie centrale de la face externe du fond de la cuve.

En d'autres termes, l'ensemble de pièces du dispositif inclut donc, en sus des au moins deux bandages de roue, avantageusement au moins deux patins, préférentiellement en polyuréthane haute densité, à fonction de réhausse du fond de la cuve de collecte, positionnables sous le fond de ladite cuve.

Ces patins permettent d'éviter une entrée en résonance de la cuve du conteneur, notamment lorsque ce dernier est déplacé à plat au sol. De plus, ils permettent de potentialiser l'effet permis par les bandages des roues qui, comme indiqué ci-dessus, concourent à atténuer les vibrations transmises par les roues à la cuve.

De préférence, le couvercle étant muni à sa périphérie d'un bord tombé et la cuve de collecte d'une collerette au niveau de son ouverture, le dispositif comprend au moins deux éléments amortisseurs, chaque élément amortisseur comprenant une pièce présentant une partie en U ou en V pour former une gorge entre les flancs de laquelle le bord tombé du couvercle est apte à être enserré, l'un des flancs de la gorge étant prolongé par une aile longitudinale externe, cette aile étant munie sur l'une de ses faces d'un bloc de mousse de hauteur supérieure à la profondeur de la gorge pour s'étendre en saillie du fond de la gorge.

En d'autres termes, l'ensemble de pièces du dispositif inclut donc, en sus des au moins deux bandages de roue, au moins deux éléments amortisseurs, chaque élément amortisseur comprenant une pièce présentant une partie en U ou en V pour former une gorge entre les flancs de laquelle le bord tombé du couvercle est apte à être enserré, l'un des flancs de la gorge étant prolongé par une aile longitudinale externe, cette aile étant munie sur l'une de ses faces d'un bloc de mousse de hauteur supérieure à la profondeur de la gorge pour s'étendre en saillie du fond de la gorge.

Ces éléments amortisseurs permettent de limiter les nuisances sonores résultant des opérations de fermeture du couvercle. Leur effet renforce celui des bandages du ou des patins en concourant à la réduction des vibrations des parois de la cuve et donc des nuisances sonores.

De préférence, la gorge d'au moins l'un des éléments amortisseurs est munie au niveau d'au moins un, de préférence au niveau de chacun de ses flancs, de crans de type sapin.

À nouveau, on obtient une fixation efficace, sans outil, du dispositif sur le conteneur.

De préférence, le dispositif comprend deux tampons élastiquement déformables positionnables sur les faces dites avant et arrière de la cuve, la face avant de la cuve étant la face de la cuve s'étendant sensiblement à l'aplomb de la liaison à pivotement du couvercle à la cuve.

En d'autres termes, l'ensemble de pièces du dispositif inclut donc, en sus des au moins deux bandages, au moins deux tampons élastiquement déformables positionnables sur les faces dites avant et arrière de la cuve, la face avant de la cuve étant la face de la cuve s'étendant sensiblement à l'aplomb de la liaison à pivotement du couvercle à la cuve.

Le tampon sur la face arrière de la cuve permet de réduire les bruits produits par contact de la face arrière du bac avec le camion de ramassage du bac lors d'une opération de vidange dudit conteneur, tandis que le tampon sur la face avant de la cuve permet de réduire les bruits résultant de l'ouverture du couvercle qui, en position de fin de course, tend à heurter la face avant du conteneur.

L'invention a encore pour objet un conteneur mobile, notamment un bac de collecte de déchets, du type comprenant une cuve de collecte ouverte par le dessus et équipée de deux roues d'appui au sol et d'un couvercle pivotant de fermeture de la cuve, ledit couvercle étant muni à sa périphérie d'un bord tombé et la cuve d'une collerette au niveau de son ouverture, caractérisé en ce que le conteneur est équipé d'un dispositif d'atténuation des bruits du type précité.

L'invention sera bien comprise à la lecture de la description suivante d'exemples de réalisation, en référence aux dessins annexés dans lesquels :

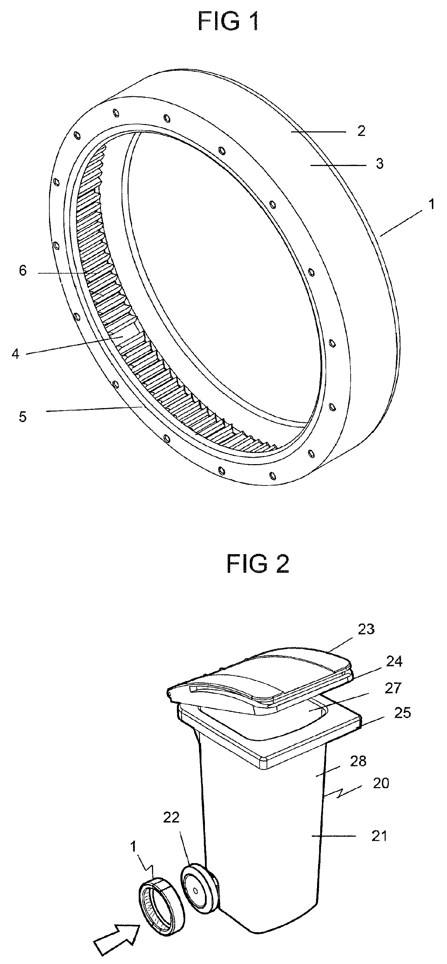

- La figure 1 représente une vue en perspective d'un bandage de roues conforme à l'invention.
- La figure 2 représente une vue en perspective d'un bandage prêt à être posé sur un conteneur.

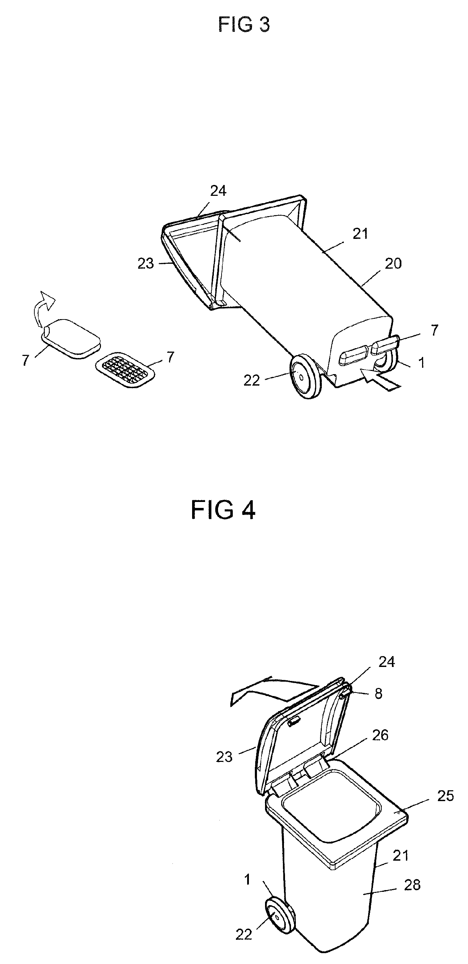

- La figure 3 représente une vue en perspective d'un conteneur équipé de patins, les patins ayant été représentés en sus, à côté du conteneur.
- La figure 4 représente une vue en perspective d'un conteneur au cours de l'ouverture du couvercle, le couvercle étant prêt à être équipé d'éléments amortisseurs.

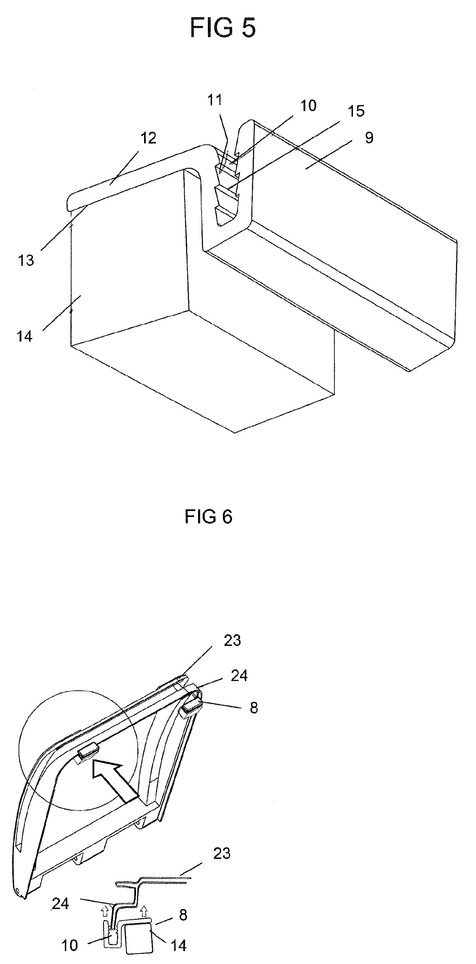

- La figure 5 représente une vue en perspective d'un élément amortisseur.
- La figure 6 représente un couvercle à élément amortisseur, avec une vue de détail de la pose de l'élément amortisseur sur ledit couvercle.

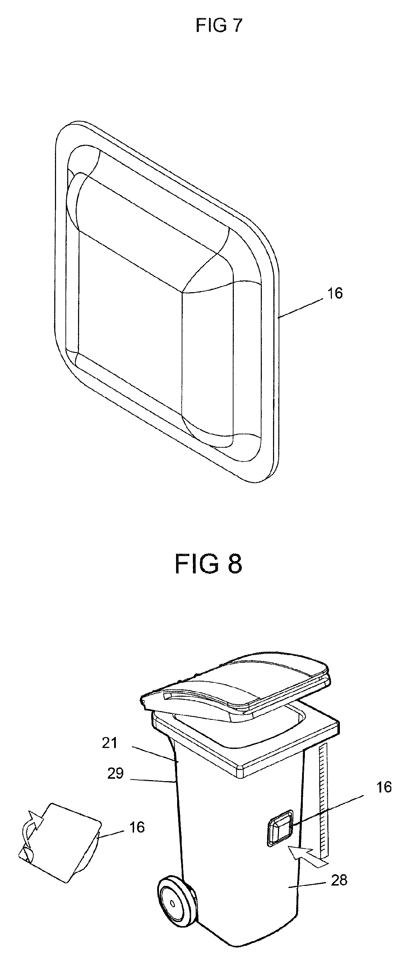

- La figure 7 représente une vue en perspective d'un tampon.
- La figure 8 représente une vue en perspective d'un conteneur équipé d'un tampon sur la face arrière, le deuxième tampon étant représenté prêt à être collé sur la face avant du conteneur, après enlèvement de la couche pelable de protection de l'adhésif dudit tampon.

Comme mentionné ci-dessus, l'invention concerne un dispositif d'atténuation des bruits pour conteneur 20 mobile, se présentant sous forme d'un ensemble de pièces prêt à monter sur ledit conteneur 20, ainsi qu'un conteneur 20 équipé d'un tel dispositif.

Dans l'exemple représenté, le conteneur 20 mobile équipé d'un tel dispositif est un bac de collecte de déchets. Ce bac comprend une cuve 21 de collecte, à ouverture 27 par le dessus, équipée de deux roues 22 d'appui au sol pour un déplacement par roulement dudit bac.

Cette cuve est de forme générale parallélipédique et comprend un fond et quatre parois latérales.

Ce bac comprend encore un couvercle 23 de fermeture de l'ouverture 27 de la cuve 21 de collecte, ce couvercle 23 étant couplé à la cuve 21 par une liaison 26 pivot formée par une charnière, pour un déplacement à pivotement du couvercle entre une position fermée dans laquelle il vient à recouvrement de l'ouverture 27 de la cuve, et une position ouverte dans laquelle il s'étend parallèlement à la face latérale de la cuve, disposée sensiblement à l'aplomb de la liaison pivot du couvercle à la cuve et appelée face 29 avant de la cuve.

Le couvercle 23 est muni à sa périphérie d'un bord 24 tombé, tandis que la cuve 21 de collecte est équipée, au niveau de son ouverture 27, d'une collerette 25 entourant ladite ouverture 27. Ainsi, en position fermée du couvercle, le bord tombé du couvercle est destiné à venir en appui sur la collerette 25 de la cuve.

Pour atténuer les bruits pouvant résulter du déplacement au sol du conteneur, de l'actionnement du couvercle et de la vidange de la cuve, le bac est équipé d'un dispositif d'atténuation des bruits qui comprend un ensemble de pièces.

Ce dispositif comprend deux bandages 1 de roue élastiquement déformables, positionnables chacun autour d'une roue 22 dudit conteneur 20. Chaque bandage 1 comprend une ceinture 2 avec la face externe 3 correspondant à la face de ladite ceinture tournée vers l'extérieur de ladite ceinture, apte à former la surface de roulement de la roue 22 à l'état positionné du bandage 1 autour de la roue 22.

Chaque ceinture 2 est munie, le long de chacun de ses bords longitudinaux, d'un flanc 5 latéral circonférentiel interne.

Les flancs 5 latéraux et la ceinture 2 sont réalisés d'une seule pièce, et confèrent audit bandage 1 une section transversale en forme générale de U ouvert en direction de l'intérieur de la ceinture 2.

La face 4 interne de la ceinture 2 opposée à la face 3 externe est munie de languettes 6 élastiquement déformables, s'étendant dans le sens de la largeur de la bande formée par la ceinture 2 et disposées écartées l'une de l'autre suivant une direction circonférentielle.

Ces languettes 6 élastiquement déformables affectent la forme de nervures ou de stries et sont réalisées d'une seule pièce avec la face 4 interne de ladite ceinture. Ces languettes 6 s'étendent de manière sensiblement parallèle entre elles.

Dans l'exemple représenté, les bandages 1 sont réalisés en un élastomère à base d'EPDM.

La réalisation de bandages sous forme d'une ceinture élastiquement déformable permet une pose aisée du bandage autour de la roue.

Pour atténuer les bruits résultant d'un déplacement au sol sans basculement du bac, le dispositif comprend encore au moins deux patins 7 en polyuréthane haute densité, à fonction de réhausse du fond de la cuve 21 de collecte.

Ces patins sont positionnables sous le fond de ladite cuve 21. L'une des faces de ces patins est munie d'un adhésif double face recouvert d'un revêtement pelable qui est éliminé au moment de la pose du patin sur le fond de la cuve, pour permettre une fixation du patin à la cuve par simple collage.

Pour atténuer les bruits résultant de l'actionnement du couvercle dans le sens d'une fermeture du couvercle, le dispositif comprend encore au moins deux éléments 8 amortisseurs. Chaque élément 8 amortisseur comprend une pièce 9 présentant une partie en U ou en V pour former une gorge 10 entre les flancs 11 de laquelle le bord 24 tombé du couvercle 23 est apte à être enserré.

L'un des flancs 11 de la gorge 10 est prolongé par une aile 12 longitudinale externe, apte à s'étendre vers l'extérieur du couvercle à l'état enserré du bord tombé du couvercle entre les flancs de la gorge.

Cette aile 12 est munie, sur l'une de ses faces apte à venir en regard de la collerette de la cuve et correspondant à la face 13 de l'aile tournée vers le fond de la gorge, d'un bloc 14 de mousse de hauteur supérieure, à la profondeur de la gorge 10 pour s'étendre en saillie du fond de la gorge 10.

Cette gorge 10 est munie, au niveau de chacun de ses flancs 11, de crans 15 de type sapin. Ainsi, pour le montage de l'élément 8 amortisseur sur le bord tombé du couvercle, il suffit d'insérer le bord tombé du couvercle dans la gorge de l'élément 8 amortisseur.

Enfin, pour atténuer les bruits résultant, d'une part de l'ouverture du couvercle et de la venue en butée du couvercle contre la face 29 avant de la cuve 21, d'autre part du contact entre camion de ramassage et face 28 arrière de la cuve lors de la vidange de la cuve, le dispositif comprend deux tampons 16 élastiquement déformables positionnables sur les faces avant 29 et arrière 28 de la cuve 2.

Chaque tampon 16 est à nouveau muni d'un adhésif double face recouvert d'un revêtement pelable, pour permettre une fixation par collage du tampon 16 à la cuve.

Grâce à la conception des éléments du dispositif d'atténuation des bruits tel que décrit ci-dessus, il est possible de procéder à la pose du dispositif de manière rapide et aisée, sans outil.

Le dispositif peut encore comprendre une échelle graduée sous forme d'une bande souple pour permettre un positionnement optimum en hauteur des tampons sur la cuve.

## Revendications

1. Dispositif d'atténuation des bruits, prêt à monter, pour conteneur (20) mobile, notamment pour bac de collecte de déchets, du type comprenant une cuve (21) de collecte équipée de deux roues (22) d'appui au sol et d'un couvercle (23) pivotant de fermeture de la cuve (21) relié à la cuve (21) par une liaison (26) à pivotement,
**caractérisé en ce que** le dispositif comprend deux bandages (1) de roue élastiquement déformables positionnables chacun autour d'une roue (22) dudit conteneur (20), chaque bandage (1) comprenant une ceinture (2) avec la face (3) externe, tournée vers l'extérieur, de ladite ceinture (2) apte à former la surface de roulement de la roue (22) à l'état positionné du bandage (1) autour de la roue (22), chaque ceinture (2) étant munie le long de chacun de ses bords longitudinaux d'un flanc (5) latéral circonférentiel interne, flancs (5) latéraux et ceinture (2) étant réalisés d'une seule pièce et conférant audit bandage (1) une section transversale en forme générale de U ouvert en direction de l'intérieur de la ceinture (2), la face (4) interne de la ceinture (2), opposée à la face (3) externe, étant munie de languettes (6) élastiquement déformables s'étendant dans le sens de la largeur de la bande formée par la ceinture (2) et disposées écartées l'une de l'autre suivant une direction circonférentielle.

2. Dispositif selon la revendication 1,
**caractérisé en ce que** les languettes (6) élastiquement déformables affectent la forme de nervures ou de stries.

3. Dispositif selon l'une des revendications précédentes,
**caractérisé en ce que** les languettes (6) élastiquement déformables sont réalisées d'une seule pièce avec la face (4) interne de ladite ceinture (2) et s'étendent de manière sensiblement parallèle entre elles.

4. Dispositif selon l'une des revendications précédentes,
**caractérisé en ce que** lesdits bandages (1) sont réalisés en un élastomère à base, de préférence, de monomère éthylène-propylène-diène (EPDM) expansé ou non.

5. Dispositif selon l'une des revendications précédentes,
**caractérisé en ce qu'**il comprend au moins un, préférentiellement deux patins (7), préférentiellement en polyuréthane haute densité à fonction de réhausse du fond de la cuve (21) de collecte, positionnables sous le fond de ladite cuve (21), préférentiellement dans la partie centrale de la face externe du fond de la cuve (21).

6. Dispositif selon l'une des revendications précédentes du type dont le couvercle (23) est muni à sa périphérie d'un bord (24) tombé et la cuve (21) de collecte d'une collerette (25) au niveau de son ouverture (27),
**caractérisé en ce qu'**il comprend au moins deux éléments (8) amortisseurs, chaque élément (8) amortisseur comprenant une pièce (9) présentant une partie en U ou en V pour former une gorge (10) entre les flancs (11) de laquelle le bord (24) tombé du couvercle (23) est apte à être enserré, l'un des flancs (11) de la gorge (10) étant prolongé par une aile (12) longitudinale externe, cette aile (12) étant munie sur l'une (13) de ses faces d'un bloc (14) de mousse de hauteur supérieure à la profondeur de la gorge (10) pour s'étendre en saillie du fond de la gorge (10).

7. Dispositif selon la revendication 6,
**caractérisé en ce que** la gorge (10) d'au moins l'un des éléments (8) amortisseurs est munie au niveau d'au moins un, de préférence au niveau de chacun de ses flancs (11), de crans (15) de type sapin.

8. Dispositif selon l'une des revendications précédentes,
**caractérisé en ce que** le dispositif comprend deux tampons (16) élastiquement déformables positionnables sur les faces dites avant (29) et arrière (28) de la cuve (21), la face avant (29) de la cuve (21) étant la face de la cuve (21) s'étendant sensiblement à l'aplomb de la liaison (26) à pivotement du couvercle (23) à la cuve (21).

9. Conteneur (20) mobile, notamment bac de collecte de déchets, du type comprenant une cuve (21) de collecte ouverte par le dessus et équipée de deux roues (22) d'appui au sol et d'un couvercle (23) pivotant de fermeture de la cuve (21), ledit couvercle (23) étant muni à sa périphérie d'un bord tombé et la cuve (21) d'une collerette (25) au niveau de son ouverture (27),
**caractérisé en ce que** le conteneur (20) est équipé d'un dispositif d'atténuation des bruits conforme à l'une des revendication 1 à 8.
